(19) Europäisches Patentamt
European Patent Office
Office européen des brevets

(11) EP 4 101 882 B1

(12) EUROPEAN PATENT SPECIFICATION

(45) Date of publication and mention of the grant of the patent:
**10.09.2025 Bulletin 2025/37**

(21) Application number: **21886562.4**

(22) Date of filing: **16.09.2021**

(51) International Patent Classification (IPC):
***C08K 7/14*** (2006.01) ***C08L 77/06*** (2006.01)

(52) Cooperative Patent Classification (CPC):
(C-Sets available)
**C08L 77/06; C08K 7/14** (Cont.)

(86) International application number:
**PCT/KR2021/012713**

(87) International publication number:
**WO 2022/092568 (05.05.2022 Gazette 2022/18)**

# (54) THERMOPLASTIC RESIN COMPOSITION AND MOLDED PRODUCT

THERMOPLASTISCHE HARZZUSAMMENSETZUNG UND FORMPRODUKT

COMPOSITION DE RÉSINE THERMOPLASTIQUE ET PRODUIT MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.10.2020 KR 20200141892**
**15.09.2021 KR 20210122959**

(43) Date of publication of application:
**14.12.2022 Bulletin 2022/50**

(73) Proprietor: **LG Chem, Ltd.**
**Seoul 07336 (KR)**

(72) Inventors:
- **KIM, Hong Jin**
**Daejeon 34122 (KR)**
- **LEE, Sang Rock**
**Daejeon 34122 (KR)**
- **SON, Sun Mo**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 3 130 633**
**WO-A1-2020/169547**
**KR-A- 20100 070 679**
**KR-A- 20130 078 602**
**KR-A- 20150 026 533**
**KR-A- 20170 072 213**
**KR-B1- 101 660 242**
**US-A1- 2016 102 203**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 7/14, C08L 77/06;**
**C08L 77/06, C08K 7/14, C08L 77/06**

## Description

[Technical Field]

The present invention relates to a thermoplastic resin composition and a molded article manufactured using the same. More particularly, the present invention relates to a thermoplastic resin composition that has significantly improved tensile strength, is lightweight, and is suitable for replacing metal parts while maintaining impact strength, elongation, and processability equal or superior to those of a conventional polyamide composite material and a molded article manufactured using the thermoplastic resin composition.

[Background Art]

When metals such as aluminum alloy or magnesium alloy are used as materials for automobile parts, there are disadvantages such as specific gravity, post-processing, price fluctuations, and environmental problems.

Accordingly, research on replacing the material of automobile parts with plastics is being actively conducted to reduce weight and reduce manufacturing costs. Polyamide resins having excellent mechanical strength, moldability, and long-term physical properties are attracting attention as alternative materials.

To apply polyamide resins as materials for automobile safety parts instead of metals such as aluminum and iron, research on polyamide composite materials including reinforcing fibers such as glass fiber (GF), aramid fiber (AF), and carbon fiber (CF) is in progress.

However, carbon fiber (CF) has the disadvantage of low impact strength to be applied as a material for automobile structures. Glass fiber (GF) that can implement impact strength is composed of various components such as silica, alumina, calcium oxide, and magnesia, and exhibits different performance depending on the composition thereof. Therefore, there is an urgent need to develop a polyamide resin composition capable of providing performance specific for applications.

US 2016/102203 A1 discloses a reinforced polyamide moulding composition. WO 2020/169547 A1 discloses the use of glass fibers for compounds containing polyamides and elastomers. EP 3130 633 A1 disclose thermoplastic resin compositions containing a polyamide and a glass fiber.

[Related Art Documents]

[Patent Documents]

KR 1626783 B1
US 2016/102203 A1
WO 2020/169547 A1
EP 3130 633 A1

[Disclosure]

[Technical Problem]

Therefore, the present invention has been made in view of the above problems, and it is one object of the present invention to provide a thermoplastic resin composition that has significantly improved tensile strength, is lightweight, and is suitable for replacing metal parts while maintaining impact strength, elongation, and processability equal or superior to those of a conventional polyamide composite material and a molded article manufactured using the thermoplastic resin composition.

The above and other objects can be accomplished by the present invention described below.

[Technical Solution]

In accordance with one aspect of the present invention, provided is a thermoplastic resin composition, including:

20 to 64 % by weight of a non-aromatic polyamide resin having a glass transition temperature (Tg) of 50 to 60 °C and a melting temperature (Tm) of 240 to 265 °C; 36 to 80 % by weight of glass fiber; and 0 to 30 % by weight of an aromatic polyamide resin,

wherein the thermoplastic resin composition has a room temperature tensile strength of 270 MPa or more as measured according to standard measurement ISO 527. The glass fiber comprising 58 to 62 % by weight of silica, 14 to 18 % by weight of alumina, 10 to 13 % by weight of calcium oxide, 8 to 10 % by weight of magnesia, 0.5 to 2 % by weight of titanium dioxide, 0.8 % by weight or less in sum of sodium oxide and potassium oxide, and 0.5 % by weight or less of $Fe_2O_3$, or
comprising 52 to 56 % by weight of silica, 12 to 16 % by weight of alumina, 20 to 24 % by weight of calcium oxide, 1.5 % by weight or less of magnesia, 1 % by weight or less of titanium dioxide, 0.8 % by weight or less in sum of sodium oxide and potassium oxide, 0.4 % by weight or less of $Fe_2O_3$, 5 to 8 % by weight of boron oxide, and 0.7 % by weight or less of fluorine (F), as defined in the claims.

When a glass transition temperature (Tg) of the non-aromatic polyamide resin is marked as "a", a glass transition temperature (Tg) of the aromatic polyamide resin is marked as "b", a melting temperature (Tm) of the non-aromatic polyamide resin is marked as "c", and a content of silica contained in the glass fiber is marked as "d", the thermoplastic resin composition may satisfy Equations 1 to 3 below.

[Equation 1]

$$4.8a \leq c \leq 5.3a,$$

[Equation 2]

$$2d \leq b \leq 2.5d,$$

and

[Equation 3]

$$a < b < c,$$

wherein a, b, c, and d satisfy $50 \leq a \leq 60$, $106 \leq b \leq 150$, $240 \leq c \leq 265$, and $52 \leq d \leq 66$, respectively.

The glass fiber includes 58 to 62 % by weight of silica, 14 to 18 % by weight of alumina, 10 to 13 % by weight of calcium oxide, 8 to 10 % by weight of magnesia, 0.5 to 2 % by weight of titanium dioxide, 0.8 % by weight or less in sum of sodium oxide and potassium oxide, and 0.5 % by weight or less of $Fe_2O_3$.

Alternatively, the glass fiber includes 52 to 56 % by weight of silica, 12 to 16 % by weight of alumina, 20 to 24 % by weight of calcium oxide, 1.5 % by weight or less of magnesia, 1 % by weight or less of titanium dioxide, 0.8 % by weight or less in sum of sodium oxide and potassium oxide, 0.4 % by weight or less of $Fe_2O_3$, 5 to 8 % by weight of boron oxide, and 0.7 % by weight or less of fluorine (F).

The glass fiber may be circular glass fiber containing 17 to 24 % by weight in sum of calcium oxide and magnesium and having a circular cross section.

The glass fiber may be flat glass fiber containing 21 to 25 % by weight in sum of calcium oxide and magnesium and having a non-circular cross section.

The glass fiber may have an aspect ratio of 1:1 to 1:4 expressed as a ratio (L/D) of length (L) to diameter (D). In this case, the diameter (D) may be an average diameter of 6 to 16 μm.

The non-aromatic polyamide resin may be an aliphatic polyamide. As a specific example, the non-aromatic polyamide resin may have a unit represented by Chemical Formula 1 below, a relative viscosity of 2.3 to 2.8, and an amorphous rate of 50 to 60 % by weight, wherein the unit is repeated 50 to 500 times, L is $(CH_2)_n$, and n is an integer of 3 to 6.

[Chemical Formula 1]

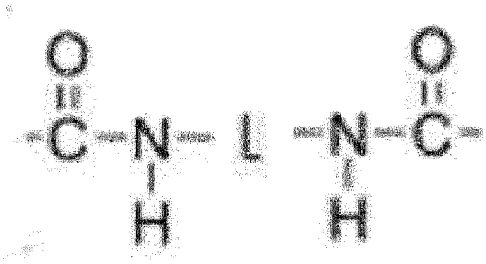

The non-aromatic polyamide resin may be polyhexamethylene adipamide (PA66), and may be included in an amount of 25 to 60 % by weight based on a total weight of the thermoplastic resin composition.

The aromatic polyamide resin may be PA MACM12, PA PACM12, or a mixture or copolyamide thereof, or may be an amorphous resin selected from polyhexamethylene isophthalamide (PA6I), PAMXDI, and PA6I/MXDI.

The aromatic polyamide resin may be polyhexamethylene isophthalamide (PA6I), and may be included in an amount of 4 to 25 % by weight based on a total weight of the thermoplastic resin composition.

The thermoplastic resin composition may further include one or more additives selected from a flame retardant, a nucleating agent, a heat stabilizer, a light stabilizer, a lubricant, an antioxidant, and a thickener.

The thermoplastic resin composition may include 40 to 60 % by weight of the non-aromatic polyamide resin; 40 to 60 % by weight of the glass fiber; and 0 to 5 % by weight of additives, and may have a specific gravity of 1.45 to 1.70 g/$cm^3$, an impact strength of 18.5 to 22.5 kJ/$m^2$, an elongation of 2.5 to 3.3 % as measured in a marked section of 50 mm according to ISO 527, and a specific gravity of 1.45 to 1.70 g/$cm^3$.

The thermoplastic resin composition may include 30 to 60 % by weight of the non-aromatic polyamide resin; 40 to 70 % by weight of the glass fiber; and 0 to 5 % by weight of additives, and may have a specific gravity of 1.45 to 1.85 g/$cm^3$, an impact strength of 18.5 to 22.5 kJ/$m^2$, an elongation of 1.9 to 3.3 % as measured in a marked section of 50 mm according to ISO 527.

The thermoplastic resin composition may include 25 to 45 % by weight of the non-aromatic polyamide resin; 4 to 25 % by weight of the aromatic polyamide resin; 50 to 60 % by weight of the glass fiber; and 0 to 5 % by weight of additives, and may have an elongation of 2.3 to 2.9 % as measured in a marked section of 50 mm according to ISO 527.

The thermoplastic resin composition may include 20 to 36 % by weight of the non-aromatic polyamide resin; 4 to 20 % by weight of the aromatic polyamide resin; 60 % by weight of the glass fiber; and 0 to 5 % by weight of additives, and may have a room temperature tensile strength of 270 MPa or more as measured according to standard measurement ISO 527, an elongation of 2.2 to 2.5 % as measured in a marked section of 50 mm according to ISO 527, and a glass fiber orientation of 225 to 250 MPa in the flow direction and 120 to 165 MPa in the perpendicular direction (TD) as measured at a speed of 5 mm/min using a specimen having a thickness of 3.2 mm and a width of 12.7 mm according to ASTM D638 Type 1.

When room temperature tensile strength according to standard measurement ISO 527 is marked as "a", elongation in a marked section of 50 mm according to ISO 527 is marked as "b", and a difference between a flow direction (MD) and a perpendicular direction (TD) of glass fiber as measured at a speed of 5 mm/min using a specimen having a thickness of 3.2 mm and a width of 12.7 mm according to ASTM D638 Type 1 is marked as "c", in equation "a+b/c", the thermoplastic resin composition may have a calculated value of 2.88 or more.

When physical property degradation rate (%) is calculated using room temperature (23 °C) tensile strength and high temperature (90 °C) tensile strength according to standard measurement ISO 527, the thermoplastic resin composition may satisfy Equation 1 below.

$$34 \leq 100 - (\text{high temperature measurement value/room temperature measurement value} \times 100) \leq 44 \qquad \text{[Equation 1]}$$

In accordance with another aspect of the present invention, provided is a method of preparing a thermoplastic resin composition, the method including:

melt-kneading and extruding 20 to 64 % by weight of a non-aromatic polyamide resin having a glass transition temperature (Tg) of 50 to 60 °C and a melting temperature (Tm) of 240 to 265 °C; 36 to 80 % by weight of glass fiber having a silica content of 52 to 66 % by weight; and 0 to 30 % by weight of an aromatic polyamide resin, wherein the thermoplastic resin composition has a room temperature tensile strength of 270 MPa or more as measured according to standard measurement ISO 527.

In accordance with yet another aspect of the present invention, provided is a molded article manufactured using the above-described thermoplastic resin composition.

The molded article may be a high-rigidity, high-toughness lightweight automotive part.

[Advantageous effects]

The present invention has an effect of providing a thermoplastic resin composition that has significantly improved tensile strength, is lightweight, and is suitable for replacing metal parts while maintaining impact strength, elongation, and processability equal or superior to those of a conventional polyamide composite material and a molded article manufactured using the thermoplastic resin composition

Therefore, the thermoplastic resin composition and the molded article according to the present invention can be widely applied to automobile parts. Specifically, the thermoplastic resin composition and the molded article can be applied to materials for automobile safety parts, including seat belts and airbags, which are subjected to strong force and pressure while driving or in emergency situations such as accidents, vehicle information guide displays, instrument panels, and metal replacement materials for digital cockpits.

[Best mode]

Hereinafter, the present invention will be described in detail to aid in understanding of the present invention. The present invention is defined by the claims.

When a thermoplastic resin composition according to the present invention was prepared by including a non-aromatic polyamide resin having specified glass transition temperature and melting temperature, an aromatic polyamide resin, and glass fiber in a specific composition ratio, and the thermoplastic resin composition had a tensile strength of 270 MPa or more as measured according to standard measurement ISO 527, considering product design and design change at the same time, high rigidity, weight reduction, and appearance of the thermoplastic resin composition were secured enough to replace existing metals. In addition, when the thermoplastic resin composition was prepared, a predetermined nucleating agent, a flame retardant, and a thickener could be optionally included when necessary. In this case, the thermoplastic resin composition had greatly improved tensile strength, was lightweight, and was suitable for replacing metal parts while maintaining impact strength, elongation, and processability equal or superior to those of a conventional polyamide composite material. Based on these results, the present inventors conducted further studies to complete the present invention.

The thermoplastic resin composition of the present invention includes 20 to 64 % by weight of a non-aromatic polyamide resin having a glass transition temperature (Tg) of 50 to 60 °C and a melting temperature (Tm) of 240 to 265 °C; 36 to 80 % by weight of glass fiber having a silica content of 52 to 66 % by weight; and 0 to 30 % by weight of an aromatic polyamide resin, and has a room temperature tensile strength of 270 MPa or more as measured according to standard measurement ISO 527. In this case, there is an advantage of providing a thermoplastic resin composition that has greatly improved tensile strength, is lightweight, and is suitable for replacing metal parts while maintaining impact strength, elongation, and processability equal or superior to those of a conventional polyamide composite material.

In addition, the thermoplastic resin composition of the present invention includes 20 to 64 % by weight of a non-aromatic polyamide resin having a glass transition temperature (Tg) of 50 to 60 °C and a melting temperature (Tm) of 240 to 265 °C; 36 to 80 % by weight of glass fiber containing a silica content of 52 to 66 % by weight and having a circular cross section or a non-circular cross section; and 0 to 30 % by weight of an aromatic polyamide resin, wherein the glass fiber includes 52 to 66 % by weight of silica, 12 to 21 % by weight of alumina, 0.5 to 24 % by weight of calcium oxide, 12 % by weight or less of magnesia, 0 to 8 % by weight of boron trioxide, 3 % by weight or less of titanium dioxide, 0 to 0.6 % by weight of $Fe_2O_3$, 0 to 8 % by weight of boron oxide, 0 to 0.7 % by weight of fluorine (F), and 0.8 % by weight or less in sum of sodium oxide and potassium oxide, and the non-aromatic polyamide resin includes 25 to 60 % by weight of polyhexamethylene adipamide (PA66) based on a total weight of the thermoplastic resin composition and has a room temperature tensile strength of 270 MPa or more as measured according to standard measurement ISO 527. In this case, there is an advantage of providing a thermoplastic resin composition that has greatly improved tensile strength, is lightweight, and is suitable for replacing metal parts while maintaining impact strength, elongation, and processability equal or superior to those of a conventional polyamide composite material.

In addition, the thermoplastic resin composition of the present invention preferably includes 20 to 64 % by weight of a non-aromatic polyamide resin having a glass transition temperature (Tg) of 50 to 60 °C and a melting temperature (Tm) of 240 to 265 °C; 36 to 80 % by weight of glass fiber containing a silica content of 52 to 66 % by weight and having a circular cross section or a non-circular cross section; and 0 to 30 % by weight of an aromatic polyamide resin, wherein the glass fiber includes 52 to 66 % by weight of silica, 12 to 21 % by weight of alumina, 0.5 to 24 % by weight of calcium oxide, 12 % by weight or less of magnesia, 0 to 8 % by weight of boron trioxide, 3 % by weight or less of titanium dioxide, 0 to 0.6 % by weight of $Fe_2O_3$, 0 to 8 % by weight of boron oxide, 0 to 0.7 % by weight of fluorine (F), and 0.8 % by weight or less in sum of sodium oxide and potassium oxide, includes 4 to 25 % by weight of the polyhexamethylene isophthalamide (PA6I) based on a total weight of the thermoplastic resin composition, and has a room temperature tensile strength of 270 MPa or more

as measured according to standard measurement ISO 527. In this case, there is an advantage of providing a thermoplastic resin composition that has greatly improved tensile strength, is lightweight, and is suitable for replacing metal parts while maintaining impact strength, elongation, and processability equal or superior to those of a conventional polyamide composite material.

Hereinafter, each component constituting the thermoplastic resin composition of the present invention will be described in detail as follows.

**Non-aromatic polyamide resin**

In one embodiment of the present invention, the non-aromatic polyamide resin has a structure not including an aromatic ring in a main chain, and is prepared by polycondensation of monomers composed of an aliphatic dicarboxylic acid and an aliphatic or alicyclic diamine.

For example, the aliphatic dicarboxylic acid may have 5 to 7 carbon atoms, preferably 6 carbon atoms.

For example, the aliphatic or alicyclic diamine may have 6 to 20 carbon atoms.

For example, the non-aromatic polyamide resin may be an aliphatic polyamide. As a specific example, the non-aromatic polyamide resin may have a unit represented by Chemical Formula 1 below, wherein the unit is repeated 50 to 500 times, L is $(CH_2)_n$, and n is an integer of 3 to 6. In addition, the non-aromatic polyamide resin may be a semi-crystalline substance, an amorphous substance, or a mixture thereof.

[Chemical Formula 1]

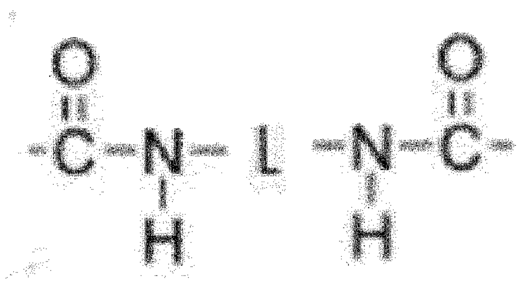

In addition, the non-aromatic polyamide resin may have a unit represented by urethane bond-linker-urethane bond. In this case, the liner may be $(CH_2)_6$, the unit is repeated 50 to 500 times, and the non-aromatic polyamide resin may be a semi-crystalline substance, an amorphous substance, or a mixture thereof.

In this description, amorphous polymers are defined as polymers that do not produce crystallization (exothermic) or melting (endothermic) peaks during differential scanning calorimetry (DSC) testing in a temperatures range from a glass transition temperature (Tg) to Tg + 300 °C. Conversely, when these peaks are recorded during DSC testing, the polymer material is a crystalline or semi-crystalline polymer. The DSC test is known to those skilled in the art.

In this description, the non-aromatic polyamide resin (A) does not contain aromatics and does not contain a certain amount of an amorphous substance, but the amorphous substance substantially occupies the majority of the resin. For example, the non-aromatic polyamide resin (A) may have an amorphous rate of 50 to 60 % by weight. When the non-aromatic polyamide resin has an amorphous rate within this range, a thermoplastic resin composition having excellent balance between mechanical properties and moldability may be secured.

In the present invention, a crystalline polymer and an amorphous polymer are defined as a polymer that produces crystallization (exothermic) or melting (endothermic) peaks and a polymer that do not produce crystallization (exothermic) or melting (endothermic) peaks, in differential scanning calorimetry (DSC) testing in a temperature range from glass transition temperature (Tg) to Tg + 300 °C, respectively.

As a specific example, the non-aromatic polyamide resin may be polyhexamethylene adipamide (PA66).

For example, the non-aromatic polyamide resin may have a glass transition temperature of 50 to 60 °C, preferably 52 to 58 °C. Within this range, due to excellent heat resistance, the tensile strength of a molded article manufactured by molding the thermoplastic resin composition of the present invention may be improved.

For example, the non-aromatic polyamide resin may have a melting temperature (Tm) of 240 to 265 °C, preferably 245 to 265 °C. Within this range, due to excellent heat resistance and processability, the tensile strength of a molded article manufactured by molding the thermoplastic resin composition of the present invention may be improved.

In the present invention, glass transition temperature (Tg) and melting temperature (Tm) may be measured by DSC. For example, when using DSC7 (Perkin-Elemer Co.) to maintain temperature at 330 °C for 5 minutes, decreasing the temperature to 23 °C at a rate of 10 °C/min, and then increasing the temperature at a rate of 10 °C/min, melting temperature (Tm) refers to an endothermic peak when melting.

The non-aromatic polyamide resin of the present invention may have a glass transition temperature (Tg) of 50 to 60 °C or 52 to 60 °C and a melting temperature (Tm) of 240 to 265 °C or 245 to 265 °C. Within this range, considering product design and design change at the same time, high rigidity, weight reduction, and appearance may be secured enough to replace existing metals.
The non-aromatic polyamide resin may have a relative viscosity of 2.3 to 2.8, preferably 2.3 to 2.7 as measured using 96 wt% sulfuric acid as a solvent at a resin concentration of 1.0 w/v% in solution according to sulfuric RV.
For example, the relative viscosity ($\eta_{ref}$) is measured at 20 °C using 0.5 % by weight of an m-cresol solution according to DIN EN ISO 307.
For example, based on the total weight of the resin composition, the non-aromatic polyamide resin may be included in an amount of 20 to 64 % by weight, 20 to 60 % by weight, 20 to 45 % by weight, 20 to 40 % by weight, 25 to 64 % by weight, 30 to 64 % by weight, 35 to 60 % by weight, 40 to 64 % by weight, or 40 to 60 % by weight. When the non-aromatic polyamide resin is included in an amount within this range, a thermoplastic resin composition having excellent physical property balance between processability, specific gravity, and mechanical properties may be secured, and a high-rigidity, high-toughness molded article capable of replacing metals may be manufactured using the thermoplastic resin composition.

**Glass fiber**

In the present invention, glass fiber is included to increase the mechanical properties, heat resistance, and dimensional stability of a polyamide resin composition.
When the inorganic glass fiber is included in the thermoplastic resin composition, the mechanical properties, such as tensile strength, impact strength, and elongation, and heat resistance of a molded article manufactured using the resin composition may be improved.
In particular, in the field of molding parts using the thermoplastic resin composition of the present invention, securing fluidity of the resin composition is the key.
A specific glass material is included in the glass fiber to improve the moldability of the polyamide resin composition of the present invention. For example, when using the above-mentioned specific glass material in the field of molding parts for automobile seat belts, processability and moldability may be sufficiently secured while maintaining sufficient heat resistance and mechanical properties of a base resin.
For example, the glass fiber may have a circular or non-circular cross section. When circular glass fiber having a circular cross section is used, in the terms of high rigidity and elongation, an effect of replacing metals may be provided.
In addition, when flat glass fiber having an oval or irregular cross section, defects in surface appearance due to protrusion of glass fiber or traces of gas flow during injection molding may be reduced. In addition, when manufacturing a product, it is possible to consider physical property deviation according to the orientation of glass fiber for each part, and advantages in terms of flatness and deformation may be obtained.
In this description, the circular, oval, and irregular cross-sections are not particularly limited when they are circular, oval, and irregular cross-sections commonly recognized in the art to which the present invention pertains.
In this description, a circular cross section shows a circular shape and refers to a case in which a dimensional ratio of a main cross-sectional axis to a secondary cross-sectional axis is close to 1 or equal to 1, but the present invention is not limited thereto.
In this description, an oval cross section shows an oval shape and refers to a case in which a dimensional ratio of a main cross-sectional axis to a secondary cross-sectional axis is 2:6, 3:6, or 3.5:5.0, but the present invention is not limited thereto.
In this description, an irregular cross section refers to a case in which a cross section is not round or oval, but the present invention is not limited thereto.
In one embodiment of the present invention, the glass fibers may be used in combination with other inorganic fiber, and the inorganic fiber includes one or more selected from carbon fiber, basalt fiber, and natural fiber, such as kenaf or hemp.
The glass fiber of the present invention may be glass fiber having a circular cross section or a non-circular cross section and including a silica content of 52 % by weight or more or 52 to 66 % by weight. In this case, considering product design and design change at the same time, high rigidity, weight reduction, and appearance may be secured enough to replace existing metals.
For example, the glass fiber may have an aspect ratio of 1:1 to 1:4, as a specific example, 1:1 to 1:3, as a more specific example, 1:1, expressed as the ratio (L/D) of length (L) to diameter (D). In this case, the thermoplastic resin composition of the present invention may provide high rigidity, high toughness, elongation, and improvement in surface appearance. As a more specific example, when the glass fiber may have an aspect ratio of 1:3 to 1:4, more specifically, 1:4, a product advantageous in terms of high rigidity, high toughness, flatness, deformation, and orientation may be provided.
In this description, diameter and length may be measured using a scanning electron microscope (SEM).

Specifically, using a scanning electron microscope, 20 inorganic fillers are selected, the diameter and length of each inorganic filler are measured using an icon bar that can measure the diameter, and then arithmetic averages are calculated to obtain an average diameter and an average length.

For example, the D may have an average diameter of 6 to 16 μm, preferably 7 to 11 μm, more preferably 10 to 11 μm. Within this range, through improvement of processability, the tensile strength of a molded article manufactured by molding the thermoplastic resin composition of the present invention may be improved.

The glass fiber includes 52 to 66 % by weight of silica, 12 to 21 % by weight of alumina, 0.5 to 24 % by weight of calcium oxide, 12 % by weight or less of magnesia, 0 to 8 % by weight of boron trioxide, 3 % by weight or less of titanium dioxide, 0 to 0.6 % by weight of $Fe_2O_3$, 0 to 8 % by weight of boron oxide, 0 to 0.7 % by weight of fluorine (F), and 0.8 % by weight or less in sum of sodium oxide and potassium oxide. In this case, a thermoplastic resin composition having excellent physical property balance between processability, specific gravity, and mechanical properties may be secured, and a high-rigidity, high-toughness molded article capable of replacing metals may be manufactured using the thermoplastic resin composition.

The glass fiber includes 58 to 62 % by weight of silica, 14 to 18 % by weight of alumina, 10 to 13 % by weight of calcium oxide, 8 to 10 % by weight of magnesia, 0.5 to 2 % by weight of titanium dioxide, 0.8 % by weight or less in sum of sodium oxide and potassium oxide, and 0.5 % by weight or less of $Fe_2O_3$. In this case, a thermoplastic resin composition having excellent physical property balance between processability, specific gravity, and mechanical properties may be secured, and a high-rigidity, high-toughness molded article capable of replacing metals may be manufactured using the thermoplastic resin composition.

The glass fiber includes 52 to 56 % by weight of silica, 12 to 16 % by weight of alumina, 20 to 24 % by weight of calcium oxide, 1.5 % by weight or less of magnesia, 1 % by weight or less of titanium dioxide, 0.8 % by weight or less in sum of sodium oxide and potassium oxide, 0.4 % by weight or less of $Fe_2O_3$, 5 to 8 % by weight of boron oxide, and 0.7 % by weight or less of fluorine (F). In this case, a thermoplastic resin composition having excellent physical property balance between processability, specific gravity, and mechanical properties may be secured, and a high-rigidity, high-toughness molded article capable of replacing metals may be manufactured using the thermoplastic resin composition.

The glass fiber may be circular glass fiber containing 17 to 24 % by weight in sum of calcium oxide and magnesium and having a circular cross section. In this case, a thermoplastic resin composition having excellent physical property balance between processability, specific gravity, and mechanical properties may be secured, and a high-rigidity, high-toughness molded article capable of replacing metals may be manufactured using the thermoplastic resin composition.

The glass fiber may be flat glass fiber containing 21 to 25 % by weight in sum of calcium oxide and magnesium and having a non-circular cross section. In this case, a thermoplastic resin composition having excellent physical property balance between processability, specific gravity, and mechanical properties may be secured, and a high-rigidity, high-toughness molded article capable of replacing metals may be manufactured using the thermoplastic resin composition.

As a specific example, the glass fiber may be represented by the general formula AaBbCcDd.

For reference, when glass fiber sold as a product is of a general-purpose grade, the glass fiber exhibits a characteristic of $d \leq 1.5$ in the above-described general formula. When glass fiber is of an ultra-high- rigidity grade, the glass fiber exhibits a characteristic of $0.5 \leq c \leq 5$. When glass fiber is of another general-purpose grade, the glass fiber exhibits a characteristic of $20 \leq c \leq 24$, $2 \leq d \leq 5$, and $22 \leq c+d \leq 29$, showing different compositions.

Contrary to what is known in the art, through Examples to be described later, in the case of the thermoplastic resin composition of the present invention, in terms of tensile strength and injection moldability, it was confirmed that a circular cross-section and a high rigidity grade, or a non-circular (flat) cross-section and a general rigidity grade are preferably used rather than an ultra-high rigidity grade.

In one embodiment of the present invention, in fiber manufacturing or post-treatment processes, the glass fiber may be treated with glass fiber sizing compositions. The glass fiber sizing compositions may include lubricants, coupling agents, and surfactants.

The lubricant is mainly used to form good strands in the manufacture of glass fiber, and the coupling agent enables good adhesion between the glass fiber and the polyamide resin. When the types of polyamide resin and glass fiber are properly selected, excellent physical properties may be imparted to a glass fiber-reinforced polyamide resin composition.

Methods of using the coupling agent include a method of directly treating the glass fiber with the coupling agent, a method of adding the coupling agent to an organic matrix, and the like. To fully exhibit the performance of the coupling agent, content thereof should be appropriately determined.

For example, the coupling agent may include amine-based, acrylic-based, and γ-aminopropyltriethoxysilane, γ-aminopropyltrimethoxysilane, N-(beta-aminoethyl) γ-aminopropyltriethoxysilane, γ-methacryloxypropyl triethoxysilane, γ-glycidoxypropyl trimethoxysilane.

For example, based on the total weight of the resin composition, the glass fiber may be included in an amount of 36 to 80 % by weight, 40 to 70 % by weight, 50 to 60 % by weight, or 60 to 65 % by weight. Within this range, considering

product design and design change at the same time, high rigidity, weight reduction, and appearance may be secured enough to replace existing metals.

### Aromatic polyamide resin

When necessary, the thermoplastic resin composition of the present invention may include an aromatic polyamide resin.

For example, the aromatic polyamide resin includes an excess of phthalamide, preferably an isophthalic acid-derived amide, and thus exhibits an amorphous structure in which crystallization hardly proceeds. In this case, compatibility with the non-aromatic polyamide resin may be provided, and a bonding site into which the above-described glass fiber may be efficiently added may be provided, thus maximizing a glass fiber input effect.

In this description, the aromatic polyamide resin does not contain a certain amount of an amorphous substance, but the amorphous substance substantially occupies the majority of the resin. For example, the aromatic polyamide resin has an amorphous rate of 90 % by weight or more.

In addition, the aromatic polyamide resin may have a glass transition temperature of 106 to 150 °C, preferably 106 to 133 °C, more preferably 117 to 120 °C as measured using a DSC. Within this range, excellent heat resistance and processability may be provided, and thus the tensile strength of a molded article manufactured by molding the thermoplastic resin composition of the present invention may be improved.

The aromatic polyamide resin may be PA MACM12, PA PACM12, or a mixture or copolyamide thereof, or may be an amorphous resin selected from polyhexamethylene isophthalamide (PA6I), PAMXDI, and PA6I/MXDI.

As a specific example, the aromatic polyamide resin may be polyhexamethylene isophthalamide (PA6I).

For example, based on a total weight of the resin composition, the aromatic polyamide resin may be included in an amount of 0 to 30 % by weight, 30 % by weight or less, 4 to 25 % by weight, or 4 to 20 % by weight. When the aromatic polyamide resin is included in an amount within the range, excellent mechanical properties, such as rigidity and processability, may be implemented.

When the glass transition temperature (Tg) of the non-aromatic polyamide resin is marked as "a", the glass transition temperature (Tg) of the aromatic polyamide resin is marked as "b", the melting temperature (Tm) of the non-aromatic polyamide resin is marked as "c", and the content of silica contained in the glass fiber is marked as "d", the thermoplastic resin composition may satisfy Equations 1 to 3 below.

[Equation 1]

$$4.8a \leq c \leq 5.3a,$$

[Equation 2]

$$2d \leq b \leq 2.5d,$$

and

[Equation 3]

$$a < b < c,$$

wherein a, b, c, and d satisfy $50 \leq a \leq 60$, $106 \leq b \leq 150$, $240 \leq c \leq 265$, and $52 \leq d \leq 66$, respectively.

### Additives

In one embodiment of the present invention, for example, the thermoplastic resin composition may include one or more selected from a flame retardant, a nucleating agent, a heat stabilizer, a light stabilizer, a lubricant, an antioxidant, and a thickener.

As the flame retardant according to the present invention, various known flame retardants may be used as long as the flame retardants do not adversely affect the thermoplastic resin composition of the present invention. Clariant_Exolit-OP-1230, which is a representative commercially available flame retardant, may be used.

As the nucleating agent according to the present invention, various known nucleating agents may be used as long

as the nucleating agents do not adversely affect the thermoplastic resin composition of the present invention. BRUGGOLEN_P22, which is a representative commercially available nucleating agent, may be used.

As the thickener according to the present invention, various known thickeners may be used as long as the thickeners do not adversely affect the thermoplastic resin composition of the present invention. Xibond250, which is a representative commercially available thickener, may be used.

As the antioxidant according to the present invention, various known antioxidants may be used as long as the antioxidants do not adversely affect the thermoplastic resin composition of the present invention.

The lubricant according to the present invention may be lignite-derived mineral wax or olefin wax, and serves to maintain excellent releasability and injection property of the thermoplastic resin composition.

The olefin wax is a polymer having a low melt viscosity and may be an oil-based solid having sliding properties and plasticity. For example, the olefin wax may include one or more selected from polyethylene wax and polypropylene wax, and commercially available products may be used.

The mineral wax has thermal stability due to high melting point and hardness thereof, and may include one or more selected from OP and E grades. Commercially available products may be used as long as the products follows the definition of the present invention.

In one embodiment of the present invention, based on a total weigh of the thermoplastic resin composition, the additives may be included in an amount of 5 % by weight or less or 0.05 to 3 % by weight, preferably 0.01 to 2 % by weight. Within this range, excellent releasability and injection property may be provided.

In addition, when necessary, processing aids, pigments, colorants, and the like may be further included.

**Thermoplastic resin composition**

For example, the glass fiber-reinforced polyamide resin composition according to the present invention has a tensile strength of 270 MPa or more as measured according to standard measurement ISO 527.

The tensile strength may be measured in a marked section (elongation measurement) of 50 mm using a specimen having a thickness of 4 mm and a width of 10 mm.

The thermoplastic resin composition may have a room temperature tensile strength of 300 MPa or more as measured according to standard measurement ISO 527 and a high temperature tensile strength of 180 MPa or more as measured at 90 °C. In this case, mechanical properties, such as rigidity and processability, may be excellent.

When physical property degradation rate (%) is calculated using room temperature (23 °C) tensile strength and high temperature (90 °C) tensile strength according to standard measurement ISO 527, the thermoplastic resin composition may satisfy Equation 1 below. In this case, mechanical properties, such as rigidity and processability, may be excellent.

$$34 \leq 100 - (\text{high temperature measurement value/room temperature measurement value} \times 100) \leq 44 \qquad \text{[Equation 1]}$$

For example, in Equation 1, calculated values may be 34 to 44, preferably 34.5 to 43.9.

When room temperature tensile strength according to standard measurement ISO 527 is marked as "a", elongation in a marked section of 50 mm according to ISO 527 is marked as "b", and the difference between the flow direction (MD) and the perpendicular direction (TD) of glass fiber as measured at a speed of 5 mm/min using a specimen having a thickness of 3.2 mm and a width of 12.7 mm according to ASTM D638 Type 1 is marked as "c", in equation "a+b/c", the thermoplastic resin composition may have a calculated value of 2.88 or more, 2.88 to 4.0, or 2.9 to 3.8. In this case, the thermoplastic resin composition may have greatly improved tensile strength, may be lightweight, and may be suitable for replacing metal parts while maintaining impact strength, elongation, and processability equal or superior to those of a conventional polyamide composite material.

As a specific example, the thermoplastic resin composition may include 31 to 41 % by weight of the non-aromatic polyamide resin; 4 to 8 % by weight of the aromatic polyamide resin; and 51 to 55 % by weight of the silica-reinforced glass fiber; and 0.2 to 6 % by weight of the flame retardant. In this case, the thermoplastic resin composition may have greatly improved tensile strength, may be lightweight, and may be suitable for replacing metal parts while maintaining impact strength, elongation, and processability equal or superior to those of a conventional polyamide composite material.

In addition, the thermoplastic resin composition of the present invention preferably includes 40 to 60 % by weight the non-aromatic polyamide resin; 40 to 60 % by weight of the glass fiber; and 0 to 5 % by weight of additives, and has a specific gravity of 1.45 to 1.70 g/cm$^3$, an impact strength of 18.5 to 22.5 kJ/m$^2$, an elongation of 2.5 to 3.3 % as measured in a marked section of 50 mm according to ISO 527, and a specific gravity of 1.45 to 1.70 g/cm$^3$. In this case, there is an advantage of providing a thermoplastic resin composition that has greatly improved tensile strength, is lightweight, and is suitable for replacing metal parts while maintaining impact strength, elongation, and processability equal or superior to those of a conventional polyamide composite material.

In addition, the thermoplastic resin composition of the present invention preferably includes 30 to 60 % by weight of the non-aromatic polyamide resin; 40 to 70 % by weight of the glass fiber; and 0 to 5 % by weight of additives, and has a specific gravity of 1.45 to 1.85 g/cm$^3$, an impact strength of 18.5 to 22.5 kJ/m$^2$, and an elongation of 1.9 to 3.3 % as measured in a marked section of 50 mm according to ISO 527. In this case, there is an advantage of providing a thermoplastic resin composition that has greatly improved tensile strength, is lightweight, and is suitable for replacing metal parts while maintaining impact strength, elongation, and processability equal or superior to those of a conventional polyamide composite material.

In addition, the thermoplastic resin composition of the present invention preferably includes 25 to 45 % by weight of the non-aromatic polyamide resin; 4 to 25 % by weight of the aromatic polyamide resin; 50 to 60 % by weight of the glass fiber; and 0 to 5 % by weight of additives, and has an elongation of 2.3 to 2.9 % as measured in a marked section of 50 mm according to ISO 527. In this case, there is an advantage of providing a thermoplastic resin composition that has greatly improved tensile strength, is lightweight, and is suitable for replacing metal parts while maintaining impact strength, elongation, and processability equal or superior to those of a conventional polyamide composite material.

In addition, the thermoplastic resin composition of the present invention preferably includes 20 to 36 % by weight of the non-aromatic polyamide resin; 4 to 20 % by weight of the aromatic polyamide resin; 60 % by weight of the glass fiber; and 0 to 5 % by weight of additives, and has a room temperature tensile strength of 270 MPa or more as measured according to standard measurement ISO 527, an elongation of 2.2 to 2.5 % as measured in a marked section of 50 mm according to ISO 527, and a glass fiber orientation of 225 to 250 MPa in the flow direction and 120 to 165 MPa in the perpendicular direction (TD) as measured at a speed of 5 mm/min using a specimen having a thickness of 3.2 mm and a width of 12.7 mm according to ASTM D638 Type 1. In this case, there is an advantage of providing a thermoplastic resin composition that has greatly improved tensile strength, is lightweight, and is suitable for replacing metal parts while maintaining impact strength, elongation, and processability equal or superior to those of a conventional polyamide composite material.

**Method of preparing thermoplastic resin composition**

The thermoplastic resin composition according to the present invention may be prepared by a method known in the art. For example, the thermoplastic resin composition may be prepared in the form of pellets by melt-extruding a mixture of each component and other additives using an extruder, and the pellets may be used for injection-molded articles and extrusion-molded articles.

The method of preparing the thermoplastic resin composition shares all the technical characteristics of the above-described thermoplastic resin composition. Accordingly, repeated description thereof will be omitted.

In one embodiment of the present invention, the pellets are extruded at a temperature of 280 to 310 °C, wherein the temperature means temperature set in a cylinder.

Extrusion kneaders commonly used in the art to which the present invention pertains may be used without particular limitation, and a twin-screw extrusion kneader is preferably used.

The temperature of a mold during injection is preferably in the range of 90 to 150 °C, preferably 100 to 120 °C. When the mold temperature is less than 90 °C, appearance characteristics may be deteriorated, and the effect of increasing crystallinity and physical properties according to annealing may be insignificant. When the mold temperature exceeds 150 °C, pellets stick to a mold, so that releasability is lowered and cooling rate may be increased, and productivity may be greatly reduced in terms of mass production.

For example, the injection process may be performed using an injection machine in which a hopper temperature or a nozzle temperature is set to 290 °C to 305 °C.

For example, the method of preparing a thermoplastic resin composition of the present invention includes a step of melt-kneading and extruding a non-aromatic polyamide resin; glass fiber; and a resin composition including a polyphthalamide-based resin and additives.

As a specific example, the method of preparing a thermoplastic resin composition includes a step of melt-kneading and extruding 20 to 64 % by weight of a non-aromatic polyamide resin having a glass transition temperature (Tg) of 50 to 60 °C and a melting temperature (Tm) of 240 to 265 °C; 36 to 80 % by weight of glass fiber having a silica content of 52 to 66 % by weight; and 0 to 30 % by weight of an aromatic polyamide resin, wherein the thermoplastic resin composition has a room temperature tensile strength of 270 MPa or more as measured according to standard measurement ISO 527.

**<Molded article>**

According to another embodiment of the present invention, a molded article manufactured using the above-described thermoplastic resin composition is provided.

For example, the molded article may be a high-rigidity, high-toughness lightweight automotive part.

As another example, the molded article may be a metal replacement par for automobile seat belts, or may be a

vehicle information guide display, an instrument panel, or a metal replacement material for digital cockpits.

For example, the molded article may have a tensile strength of 270 MPa or more, preferably 300 MPa or more as measured according to standard measurement ISO 527.

In addition, the molded article may have a high temperature tensile strength of 180 MPa or more as measured at 90 °C according to standard measurement ISO 527.

Accordingly, the thermoplastic resin composition of the present invention may be used as a material for a molded article requiring excellent moldability, heat resistance, high rigidity, and high toughness.

The thermoplastic resin composition of the present invention may be applied to fields requiring high rigidity, high toughness, and weight reduction. For example, in addition to automobile parts, the thermoplastic resin composition of the present invention may be used for electrical and electronic parts, office equipment parts, and the like.

In describing the thermoplastic resin composition and the molded article, it should be noted that other conditions or equipment not explicitly described herein may be appropriately selected within the range commonly practiced in the art without particular limitation.

**[Examples]**

The specifications of a non-aromatic polyamide resin (A), glass fiber (B), a polyphthalamide-based resin (C), a nucleating agent (D), a flame retardant (E), and a thickener (F) used in Examples of the present invention and Comparative Examples are as follows.

(A) Non-aromatic polyamide resin

(A-1) PA66 (amorphous rate: 50 to 60 % by weight, Tg: 50 to 60 °C, Tm: 263 °C, relative viscosity: 2.4)
(A-2) PA66 (amorphous rate: 50 to 60 % by weight, Tg: 50 to 60 °C, Tm: 270 °C, relative viscosity: 2.7)
(A-3) PA6 (amorphous rate: 50 to 60 % by weight, Tg: 45 °C, Tm: 220 °C, relative viscosity: 2.5)
(A-4) PA46 (amorphous rate: 20 to 30 % by weight, Tm: 295 °C)

(B) Glass fiber

(B-1) Rigid glass fiber (circular cross section, aspect ratio (L/D): 1:1, diameter (D): 10 um): 58 to 62 % by weight of silica, 14 to 18 % by weight of alumina, 10 to 13 % by weight of calcium oxide, 8 to 10 % by weight of magnesia, 0.5 to 2 % by weight of titanium dioxide, 0.5 % by weight or less of $Fe_2O_3$, and 0.8 % by weight or less in sum of sodium oxide and potassium oxide
(B-2) Rigid glass fiber (circular cross section, aspect ratio (L/D): 1:1, diameter (D): 10 um): 62 to 66 % by weight of silica, 18 to 21 % by weight of alumina, 0.5 to 5 % by weight of calcium oxide, 8 to 12 % by weight of magnesia, 0.4 to 3 % by weight of titanium dioxide, 0.1 to 0.6 % by weight of $Fe_2O_3$, and 0.1 to 0.8 % by weight in sum of sodium oxide and potassium oxide
(B-3) general-purpose glass fiber having a circular cross section (aspect ratio (L/D): 1:1, diameter (D): 10 um): 57 to 61 % by weight of silica, 11 to 15 % by weight of alumina, 20 to 24 % by weight of calcium oxide, 2 to 5 % by weight of magnesia, 1.0 % by weight or less of titanium dioxide, 0.5 % by weight or less of $Fe_2O_3$, and 0.8 % by weight or less in sum of sodium oxide and potassium oxide
(B-4) Carbon fiber (product name: T300, Toray Co.)
(B-5) Stainless steel fiber (composite material, product name: GR75C16-E4_EN_LR)
(B-6) Wollastonite (product name: XA-600T, Koch Co.)
(B-7) Rigid glass fiber (non-circular cross section, aspect ratio (L/D): 1:3, flat type, diameter (D): 8 um): 58 to 62 % by weight of silica, 14 to 18 % by weight of alumina, 10 to 13 % by weight of calcium oxide, 8 to 10 % by weight of magnesia, 0.2 to 2 % by weight of titanium dioxide, 0.6 % by weight or less of $Fe_2O_3$, and 0.8 % by weight or less in sum of sodium oxide and potassium oxide
(B-8) general-purpose glass fiber having a non-circular cross section (aspect ratio (L/D): 1:4, flat type, diameter (D): 7um): 52 to 56 % by weight of silica, 12 to 16 % by weight of alumina, 20 to 24 % by weight of calcium oxide, 1.5 % by weight or less of magnesia, 1.0 % by weight or less of titanium dioxide, 5 to 8 % by weight of $B_2O_3$, 0.7 % by weight or less of fluorine (F), and 0.8 % by weight or less in sum of sodium oxide and potassium oxide
(B-9) Milled GF (product name: EPH-80M, Nittobo Co.)
(B-10) Glass bead

(C) Polyphthalamide-based resin

(C-1) Amorphous 6I (amorphous: 90 % by weight or more, Tg: 106 to 150 °C)

(C-2) Amorphous 6I6T (70:30) (amorphous: less than 90 % by weight, Tg: 115 °C or higher)

(D) Nucleating agent (product name: P22, BRUGGOLEN Co.)
(E) Flame retardant (product name: Exolit-OP-1230, Clariant Co.)
(F) Thickener (product name: Xibond250)

**Examples 1 to 3 and Comparative Examples 1 to 6**

Each component was added according to the content shown in Table 1 below, and melt-kneaded in a twin-screw extruder heated to 280 to 310 °C to prepare a resin composition in a pellet state.
The prepared pellets were dried at 120 °C for 4 hours or more, and then were injected under conditions of a mold temperature of 120 °C, a hopper temperature of 290 °C, and a nozzle temperature of 305 °C using a screw injection machine to obtain a specimen for evaluating mechanical properties. The physical properties of the specimen having a thickness of 4 mm, a width of 10 mm, and a mark section (elongation measurement) of 50 mm were measured in the following methods, and the results are shown in Table 1 below.

*Specific gravity (unit: $g/cm^3$): Specific gravity was measured according to ISO 1183.

*Tensile strength (unit: MPa): Tensile strength was measured at a room temperature (23 °C) and a high temperature (90 °C) according to ISO 527.

*Elongation (unit: %): Elongation was measured according to ISO 527.

*Impact strength (unit: $KJ/m^2$): Impact strength was measured according to ISO 179 (charpy).

*Extrusion processability: Melt strength and breakage of yarn were visually observed, and according to the observation results, the specimens were marked as very good (◎) , good (◦), insufficient (△), or poor (X).

*Injection moldability: The appearance of an injection-molded article was observed with the naked eye, and the injection-molded article was marked as very good (◎), good (◦), insufficient (△), or poor (X), or was scored from 1 to 15. Note that, as the value decreases, the quality of appearance increases.

[Table 1]

| Classif ication | Exa mpl e 1 | Exa mpl e 2 | Exa mpl e 3 | Compa rativ e Examp le 1 | Compa rativ e Examp le 2 | Compa rativ e Examp le 3 | Compa rativ e Examp le 4 | Compa rativ e Examp le 5 | Compa rativ e Examp le 6 |
|---|---|---|---|---|---|---|---|---|---|
| A-1 | 60 | 50 | 40 | 40 | 45 | 60 | 40 | 40 | 65 |
| B-1 | 40 | 50 | 60 | - | - | - | - | - | - |
| B-2 | - | - | - | - | - | - | 50 | 40 | - |
| B-3 | - | - | - | 60 | 40 | - | - | - | - |
| B-4 | - | - | - | - | - | 40 | 10 | 20 | 30 |
| B-5 | - | - | - | - | - | - | - | - | 5 |
| B-6 | - | - | - | - | 15 | - | - | - | - |
| Specifi c gravity | 1.4 5 | 1.5 5 | 1.7 0 | 1.70 | 1.71 | 1.23 | 1.63 | 1.59 | 1.44 |
| Room tempera | 270 | 292 | 311 | 260 | 190 | 251 | 269 | 213 | 210 |
| ture tensile strengt h | | | | | | | | | |
| Impact strengt h | 18? 5 | 22. 5 | 21. 5 | 19.0 | 7.0 | 8.7 | 10.9 | 9.4 | 8.0 |
| Elongat ion | 3.3 | 2.7 | 2.5 | 2.0 | 1.7 | 1.8 | 1.5 | 0.8 | 1.2 |

(In Table 1, the contents of A-1, A-2, A-3, A-4, B-1, B-2, B-3, B-4, B-5, and B-6 are given in % by weight based on 100

% by weight in total of the thermoplastic resin.)

As shown in Table 1, in the case of Examples 1 to 3 containing the non-aromatic polyamide resin and the glass fiber, which are essential components according to the present invention, in an appropriate composition, specific gravity was 1.45 to 1.70 g/$cm^3$, tensile strength was 270 MPa or more, elongation was 2.5 to 3.3 %, and impact strength was 18.5 KJ/$m^2$ or more, showing physical property balance between high rigidity, high toughness, and specific gravity.

On the other hand, in the case of Comparative Example 1 using general-purpose glass fiber as the glass fiber, tensile strength was reduced.

In addition, in the case of Comparative Example 2 using a mixture of general-purpose glass fiber and Wollastonite as the glass fiber, in addition to tensile strength, elongation and impact strength were reduced.

In addition, in the case of Comparative Example 3 using carbon fiber instead of glass fiber as the glass fiber, mechanical properties such as tensile strength and impact strength were degraded.

In addition, in the case of Comparative Example 4 in which appropriate glass fiber was used as the glass fiber and a certain amount of carbon fiber was mixed, elongation and impact strength were reduced. In the case of Comparative Example 5 in which the content of carbon fiber was increased, in addition to elongation and impact strength, tensile strength was reduced.

In the case of Comparative Example 6 using a mixture of carbon fiber and stainless steel fiber instead of glass fiber as the glass fiber, mechanical properties such as tensile strength, elongation, and impact strength were degraded.

**Examples 4 to 6 and Comparative Examples 7 and 8**

Specimens were prepared in the same manner as in Example 1, except that each component was added according to the contents shown in Table 2 below. The physical properties of the specimens were measured in the same manner as in Example 1, and the results are shown in Table 2 below.

[Table 2]

| Classification | Example 4 | Example 5 | Example 6 | Comparative Example 7 | Comparative Example 8 |
|---|---|---|---|---|---|
| A-1 | 36 | 20 | - | - | - |
| A-2 | - | - | 32 | - | - |
| A-3 | - | - | - | - | 40 |
| A-4 | - | - | - | 34 | - |
| B-1 | 60 | 60 | 60 | - | - |
| B-2 | - | - | - | 50 | 60 |
| C-1 | 4 | 20 | 8 | 6 | - |
| Room temperature tensile strength | 310 | 303 | 315 | 275 | 285 |
| Elongation | 2.5 | 2.3 | 2.6 | 1.8 | 2.3 |
| Injection moldability | 6 | 4 | 5 | 8 | 7 |
| Extrusion processability | ◎ | ○ | ◎ | X | △ |

(In Table 2, the contents of A-1, A-2, A-3, A-4, B-1, B-2, B-3, B-4, B-5, B-6, C-1, and C-2 are given in % by weight based on 100 % by weight in total of the thermoplastic resin.) As shown in Table 2, in the case of Examples 4 to 6 including the non-aromatic polyamide resin and the glass fiber, which are essential components according to the present invention, and the polyphthalamide-based resin in an appropriate composition, tensile strength was 303 MPa or more, and elongation was 2.3 to 2.6 %, showing that a molded article had excellent appearance. In addition, physical property balance between high rigidity, high toughness, processability, and injection moldability was confirmed.

On the other hand, in the case of Comparative Example 7 using a non-aromatic polyamide resin having inadequate glass transition temperature and melting temperature, injection moldability, extrusion processability, tensile strength, and elongation were degraded.

In addition, in the case of Comparative Example 8 using a mixture of a non-aromatic polyamide resin having inadequate glass transition temperature and melting temperature and rigid glass fiber, in addition to injection moldability and tensile strength, extrusion processability and elongation were deteriorated.

**Examples 7 to 9 and Comparative Examples 9 to 18**

Specimens were prepared in the same manner as in Example 1, except that each component was added according to the contents shown in Table 3 below. The physical properties of the specimens were measured in the same manner as in Example 1, and the results are shown in Table 3 below.

Note that, the physical property degradation rate (unit: %) shown in Table 3 below was obtained by performing measurement at room temperature (23 °C), performing measurement at high temperature (90 °C), and then calculating the degree of degradation in physical properties at high temperature compared to room temperature by Equation 1.

$$100 - (\text{High temperature measurement value}/\text{Room temperature measurement value} \times 100) \quad \text{[Equation 1]}$$

[Table 3]

| Classification | Example 7 | Example 8 | Example 9 | Comparative Example 9 | Comparative Example 10 | Comparative Example 11 | Comparative Example 12 | Comparative Example 13 | Comparative Example 14 | Comparative Example 15 | Comparative Example 16 | Comparative Example 17 | Comparative Example 18 |
|---|---|---|---|---|---|---|---|---|---|---|---|---|---|
| A-1 | 31 | 37 | 40 | - | 60 | 12 | - | - | 33.8 | 32 | 34 | 33.8 | 35 |
| A-2 | - | - | - | - | - | - | - | - | - | - | - | - | - |
| A-3 | - | - | - | 34 | - | - | - | - | - | - | - | - | - |
| A-4 | - | - | - | - | - | - | - | 40 | - | - | - | - | - |
| B-1 | 65 | 55 | 60 | 60 | 35 | 60 | 60 | 60 | 60 | 60 | 60 | 60 | 60 |
| C-1 | 4 | 8 | - | 6 | 5 | - | - | - | 6 | 5 | 5 | 6 | 5 |
| C-2 | - | - | - | - | - | 28 | 40 | - | - | - | - | - | - |
| D | - | - | - | - | - | - | - | - | 0.2 | 2 | - | - | - |
| E | - | - | - | - | - | - | - | - | - | - | 1 | | |
| F | - | - | - | - | - | - | - | - | - | - | - | 0.2 | 5 |
| Room temperature tensile strength | 300 | 320 | 306 | 285 | 240 | 276 | 270 | 270 | 295 | 270 | 260 | 289 | Not measurable |
| High temperature | 180 | 180 | 200 | - | - | 115 | 180 | - | 165 | - | 130 | 151 | |
| tensile strength | | | | | | | | | | | | | |
| Injection moldability | - | - | - | - | ◎ | - | ◎ | - | - | - | - | - | - |

(continued)

| Classification | Example 7 | Example 8 | Example 9 | Comparative Example 9 | Comparative Example 10 | Comparative Example 11 | Comparative Example 12 | Comparative Example 13 | Comparative Example 14 | Comparative Example 15 | Comparative Example 16 | Comparative Example 17 | Comparative Example 18 |
|---|---|---|---|---|---|---|---|---|---|---|---|---|---|
| Extrusion processabilitv | ◎ | ◎ | ○ | ○ | ○ | ○ | △ | X | ○ | △ | X | △ | X |
| Physical property degradation rate | 40 | 43 .7 5 | 34 .6 4 | - | - | 58. 33 | 33L 33 | - | 44. 06 | - | 47. 75 | - | - |

(In Table 3, the contents of A-1, A-2, A-3, A-4, B-1, B-2, B-3, B-4, B-5, B-6, C-1, and C-2 are given in % by weight based on 100 % by weight in total of the thermoplastic resin, and the contents of D, E, and F are given in parts by weight based on 100 parts by weight in total of the thermoplastic resin.) As shown in Table 3, in the case of Examples 7 to 9 including the non-aromatic polyamide resin and the glass fiber, which are essential components according to the present invention, the polyphthalamide-based resin, and additives in appropriate compositions, room temperature tensile strength was 300 to 320 MPa, high temperature tensile strength was 180 MPa or more, extrusion processability was excellent, and physical property degradation rate was 40 % or less, showing physical property balance between high rigidity, high toughness, processability, and thermal properties.

On the other hand, in the case of Comparative Example 9 using a small amount of a non-aromatic polyamide resin having inadequate glass transition temperature and melting temperature, injection moldability and room temperature tensile strength were degraded.

In addition, in the case of Comparative Example 10 using a small amount of appropriate glass fiber, room temperature tensile strength was poor.

In addition, in the case of Comparative Examples 11 and 12, in which a small amount of an appropriate non-aromatic polyamide resin was used and an inappropriate polyphthalamide-based resin was mixed, according to the content of the polyphthalamide-based resin, extrusion processability and room temperature tensile strength were poor, or room temperature tensile strength, high temperature tensile strength, and physical property degradation rate were degraded. In addition, in the case of Comparative Example 14 using an appropriate non-aromatic polyamide resin and including a non-aromatic polyamide resin having inappropriate glass transition temperature and melting temperature, high temperature tensile strength and physical property degradation rate were degraded.

In addition, in the case of Comparative Example 13 using a non-aromatic polyamide resin having inappropriate glass transition temperature and melting temperature, extrusion processability and room temperature tensile strength were poor.

In addition, in Comparative Examples 15 to 18, when a small amount of a non-aromatic polyamide resin having inappropriate glass transition temperature and melting temperature was used, the effects of additives were evaluated. In the case of Comparative Example 15 using an excess of a nucleating agent, extrusion processability and room temperature tensile strength were poor. In the case of Comparative Example 16 using a flame retardant, extrusion processability, room temperature tensile strength, high temperature tensile strength, and physical property degradation rate were reduced. In the case of Comparative Example 17 using a small amount of a thickener, extrusion processability was degraded, and high temperature tensile strength and physical property degradation rate were poor. In the case of Comparative Example 18 using an excess of a thickener, extrusion processability was poor, and tensile strength and physical property degradation rate could not be measured. It can be seen that introduction of additives such as heat-resistant stabilizers and flame retardants has little effect on improving high temperature properties and reduces extrusion processability.

## Examples 10 to 13 and Comparative Examples 19 to 22

Specimens were prepared in the same manner as in Example 1, except that each component was added according to the contents shown in Table 4 below. The physical properties of the specimens were measured in the same manner as in Example 1, and the results are shown in Table 4 below.

Note that, MD orientation and TD orientation shown in Table 4 below are the measurement results of physical properties according to glass fiber orientation (unit: MPa) for MD (flow direction) and TD (perpendicular direction) according to ASTM D638 Type 1. At this time, specimen thickness was 3.2 mm, specimen width was 12.7 mm, marked section (elongation measurement) was 50 mm, and measurement rate was 5 mm/min.

[Table 4]

| Classifi cation | Exam ple 10 | Exam ple 11 | Exam ple 12 | Exam ple 13 | Compar ative Exampl e 19 | Compar ative Exampl e 20 | Compar ative Exampl e 21 | Compar ative Exampl e 22 |
|---|---|---|---|---|---|---|---|---|
| A-1 | 36 | 20 | 34 | 40 | 40 | 32 | 20 | 40 |
| B-1 | 60 | - | - | - | - | 50 | 55 | - |
| B-3 | - | - | - | - | 60 | - | - | - |
| B-7 | - | 60 | - | - | - | - | - | - |
| B-8 | - | - | 60 | 60 | - | - | - | 50 |
| B-9 | - | - | - | - | - | 10 | - | 10 |
| B-10 | - | - | - | - | - | - | 5 | - |
| C-1 | 4 | 20 | 6 | - | - | 8 | 20 | - |
| MD orientat ion | 225 | 235 | 250 | 240 | 190 | 205 | 210 | 230 |
| TD orientat ion | 120 | 140 | 165 | 150 | 95 | 100 | 110 | 125 |
| Room temperat ure tensile strength | 310 | 300 | 305 | 300 | 260 | 280 | 275 | 273 |
| Elongati on | 2.5 | 2.2 | 2.5 | 2.3 | 2.0 | 2.8 | 2.9 | 2.6 |

(In Table 4, the contents of A-1, A-2, A-3, A-4, B-1, B-2, B-3, B-4, B-5, B-6, C-1, and C-2 are given in % by weight based on 100 % by weight in total of the thermoplastic resin.) As shown in Table 4, under the condition that the non-aromatic polyamide resin and the glass fiber, which are essential components according to the present invention, and the polyphthalamide-based resin were included, physical properties were evaluated according to the cross-sectional shapes of the glass fiber. When the non-aromatic polyamide resin, the glass fiber, and the polyphthalamide-based resin were included within an appropriate composition range, in the case of Example 10 in which the glass fiber had a circular cross section and Examples 11 and 12 in which the glass fiber had a non-circular cross section, according to the cross-sectional shape and aspect ratio of the glass fiber, physical property deviation between MD (flow direction) and TD (perpendicular direction) was minimized. Thus, room temperature tensile strength was 300 to 310 MPa, and elongation was 2.2 to 2.5 %, showing physical property balance between high toughness and processability.

In addition, in the case of Example 13 not including the polyphthalamide-based resin, according to the cross-sectional shape and aspect ratio of fiber, physical property deviation between MD (flow direction) and TD (perpendicular direction) was minimized. Thus, room temperature tensile strength was 300 MPa, and elongation was 2.3 %, showing physical property balance between high toughness and processability.

On the other hand, in the case of Comparative Example 19 using a general-purpose glass fiber having a circular cross section, the orientation, tensile strength, and elongation of glass fiber were degraded.

In addition, in the case of Comparative Examples 20 to 22 using appropriate glass fiber but having inappropriate types including glass beads, the orientation and tensile strength of glass fiber were poor. Even though the orientation of the glass fiber was appropriate, the tensile strength thereof was reduced.

In conclusion, when resin reinforcement is performed by adding, in a specific composition ratio, glass fiber, an aromatic polyamide resin, additives, and the like to a non-aromatic polyamide resin having specified glass transition temperature and melting temperature disclosed in the present invention, the composition and shape of glass fiber may be

controlled, and thus physical property balance between processability, specific gravity, and rigidity of the resin may be realized, thereby providing a molded article capable of replacing lightweight metal parts for automobiles.

## Claims

1. A thermoplastic resin composition, comprising:

   20 to 64 % by weight of a non-aromatic polyamide resin having a glass transition temperature (Tg) of 50 to 60 °C measured by DSC using a heating rate of 10°C/min and a melting temperature (Tm) of 240 to 265 °C measured by DSC using a heating rate of 10°C/min;
   36 to 80 % by weight of glass fiber comprising 58 to 62 % by weight of silica, 14 to 18 % by weight of alumina, 10 to 13 % by weight of calcium oxide, 8 to 10 % by weight of magnesia, 0.5 to 2 % by weight of titanium dioxide, 0.8 % by weight or less in sum of sodium oxide and potassium oxide, and 0.5 % by weight or less of $Fe_2O_3$, or comprising 52 to 56 % by weight of silica, 12 to 16 % by weight of alumina, 20 to 24 % by weight of calcium oxide, 1.5 % by weight or less of magnesia, 1 % by weight or less of titanium dioxide, 0.8 % by weight or less in sum of sodium oxide and potassium oxide, 0.4 % by weight or less of $Fe_2O_3$, 5 to 8 % by weight of boron oxide, and 0.7 % by weight or less of fluorine (F); and
   0 to 30 % by weight of an aromatic polyamide resin,
   wherein the thermoplastic resin composition has a room temperature tensile strength of 270 MPa or more as measured according to standard measurement ISO 527.

2. The thermoplastic resin composition according to claim 1, wherein a glass transition temperature (Tg) of the non-aromatic polyamide resin is marked as "a", a glass transition temperature (Tg) of the aromatic polyamide resin is marked as "b", a melting temperature (Tm) of the non-aromatic polyamide resin is marked as "c", and a content of silica contained in the glass fiber is marked as "d", the thermoplastic resin composition satisfies Equations 1 to 3 below.

   [Equation 1]

   $$4.8a \leq c \leq 5.3a,$$

   [Equation 2]

   $$2d \leq b \leq 2.5d,$$

   and

   [Equation 3]

   $$a < b < c,$$

   wherein a, b, c, and d satisfy $50 \leq a \leq 60$, $106 \leq b \leq 150$, $240 \leq c \leq 265$, and $52 \leq d \leq 66$, respectively.

3. The thermoplastic resin composition according to claim 1, wherein the glass fiber is circular glass fiber containing 17 to 24 % by weight in sum of calcium oxide and magnesium and having a circular cross section.

4. The thermoplastic resin composition according to claim 1, wherein the glass fiber is flat glass fiber containing 21 to 25 % by weight in sum of calcium oxide and magnesium and having a non-circular cross section.

5. The thermoplastic resin composition according to claim 1, wherein the glass fiber has an aspect ratio of 1:1 to 1:4 expressed as a ratio (L/D) of length (L) to diameter (D), wherein the diameter (D) is an average diameter of 6 to 16 μm.

6. The thermoplastic resin composition according to claim 1, wherein the non-aromatic polyamide resin is polyhexamethylene adipamide (PA66), and is comprised in an amount of 25 to 60 % by weight based on a total weight of the

thermoplastic resin composition.

7. The thermoplastic resin composition according to claim 1, wherein the aromatic polyamide resin is polyhexamethylene isophthalamide (PA6I), and is comprised in an amount of 4 to 25 % by weight based on a total weight of the thermoplastic resin composition.

8. The thermoplastic resin composition according to claim 1, further comprising 5 % by weight or less of one or more additives selected from a flame retardant, a nucleating agent, a heat stabilizer, a light stabilizer, a lubricant, an antioxidant, and a thickener based on a total weight of the thermoplastic resin composition.

9. The thermoplastic resin composition according to claim 1, wherein, when room temperature tensile strength according to standard measurement ISO 527 is marked as "a", elongation in a marked section of 50 mm according to ISO 527 is marked as "b", and a difference between a flow direction (MD) and a perpendicular direction (TD) of glass fiber as measured at a speed of 5 mm/min using a specimen having a thickness of 3.2 mm and a width of 12.7 mm according to ASTM D638 Type 1 is marked as "c", in equation "a+b/c", the thermoplastic resin composition has a calculated value of 2.88 or more.

10. The thermoplastic resin composition according to claim 1, wherein, when physical property degradation rate (%) is calculated using room temperature (23 °C) tensile strength and high temperature (90 °C) tensile strength according to standard measurement ISO 527, the thermoplastic resin composition satisfies Equation 1 below.

$$34 \leq 100 - (\text{high temperature measurement value/room temperature measurement value} \times 100) \leq 44 \quad \text{[Equation 1]}$$

11. A method of preparing a thermoplastic resin composition, comprising melt-kneading and extruding 20 to 64 % by weight of a non-aromatic polyamide resin having a glass transition temperature (Tg) of 50 to 60 °C measured by DSC using a heating rate of 10°C/min and a melting temperature (Tm) of 240 to 265 °C measured by DSC using a heating rate of 10°C/min; 36 to 80 % by weight of glass fiber comprising 58 to 62 % by weight of silica, 14 to 18 % by weight of alumina, 10 to 13 % by weight of calcium oxide, 8 to 10 % by weight of magnesia, 0.5 to 2 % by weight of titanium dioxide, 0.8 % by weight or less in sum of sodium oxide and potassium oxide, and 0.5 % by weight or less of $Fe_2O_3$, or comprising 52 to 56 % by weight of silica, 12 to 16 % by weight of alumina, 20 to 24 % by weight of calcium oxide, 1.5 % by weight or less of magnesia, 1 % by weight or less of titanium dioxide, 0.8 % by weight or less in sum of sodium oxide and potassium oxide, 0.4 % by weight or less of $Fe_2O_3$, 5 to 8 % by weight of boron oxide, and 0.7 % by weight or less of fluorine (F); and 0 to 30 % by weight of an aromatic polyamide resin,
wherein the thermoplastic resin composition has a room temperature tensile strength of 270 MPa or more as measured according to standard measurement ISO 527.

12. A molded article manufactured using the thermoplastic resin composition according to any one of claims 1 to 10.

**Patentansprüche**

1. Thermoplastische Harzzusammensetzung, umfassend:

20 bis 64 Gew.-% eines nichtaromatischen Polyamidharzes mit einer Glasübergangstemperatur (Tg) von 50 bis 60 °C, gemessen durch DSC unter Verwendung einer Heizrate von 10 °C/min, und einer Schmelztemperatur (Tm) von 240 bis 265 °C, gemessen durch DSC unter Verwendung einer Heizrate von 10 °C/min;
36 bis 80 Gew.-% Glasfaser,

umfassend 58 bis 62 Gew.-% Siliciumdioxid, 14 bis 18 Gew.-% Aluminiumoxid, 10 bis 13 Gew.-% Calciumoxid, 8 bis 10 Gew.-% Magnesiumoxid, 0,5 bis 2 Gew.-% Titandioxid, 0,8 Gew.-% oder weniger in der Summe von Natriumoxid und Kaliumoxid und 0,5 Gew.-% oder weniger von $Fe_2O_3$ , oder
umfassend 52 bis 56 Gew.-% Siliciumdioxid, 12 bis 16 Gew.-% Aluminiumoxid, 20 bis 24 Gew.-% Calciumoxid, 1,5 Gew.-% oder weniger Magnesiumoxid, 1 Gew.-% oder weniger Titandioxid, 0,8 Gew.-% oder weniger in der Summe von Natriumoxid und Kaliumoxid, 0,4 Gew.-% oder weniger von $Fe_2O_3$ , 5 bis 8 Gew.-% Boroxid und 0,7 Gew.-% oder weniger von Fluor (F); und

0 bis 30 Gew.-% eines aromatischen Polyamidharzes,
wobei die thermoplastische Harzzusammensetzung eine Raumtemperaturzugfestigkeit von 270 MPa oder mehr aufweist, gemessen gemäß Standardmessung ISO 527.

**2.** Thermoplastische Harzzusammensetzung nach Anspruch 1, wobei eine Glasübergangstemperatur (Tg) des nichtaromatischen Polyamidharzes als "a" markiert ist, eine Glasübergangstemperatur (Tg) des aromatischen Polyamidharzes als "b" markiert ist, eine Schmelztemperatur (Tm) des nichtaromatischen Polyamidharzes als "c" markiert ist und ein Gehalt an Siliciumdioxid, das in der Glasfaser enthalten ist, als "d" markiert ist, wobei die thermoplastische Harzzusammensetzung die nachstehenden Gleichungen 1 bis 3 erfüllt:

[Gleichung 1]

$$4{,}8a \leq c \leq 5{,}3a,$$

[Gleichung 2]

$$2d \leq b \leq 2{,}5d$$

und

[Gleichung 3]

$$a < b < c,$$

wobei a, b, c und d jeweils $50 \leq a \leq 60$, $106 \leq b \leq 150$, $240 \leq c \leq 265$ und $52 \leq d \leq 66$ erfüllen.

**3.** Thermoplastische Harzzusammensetzung nach Anspruch 1, wobei die Glasfaser eine kreisförmige Glasfaser ist, die 17 bis 24 Gew.-% in der Summe von Calciumoxid und Magnesium enthält und einen kreisförmigen Querschnitt aufweist.

**4.** Thermoplastische Harzzusammensetzung nach Anspruch 1, wobei die Glasfaser eine flache Glasfaser ist, die 21 bis 25 Gew.-% in der Summe von Calciumoxid und Magnesium enthält und einen nichtkreisförmigen Querschnitt aufweist.

**5.** Thermoplastische Harzzusammensetzung nach Anspruch 1, wobei die Glasfaser ein Aspektverhältnis von 1:1 bis 1:4 aufweist, ausgedrückt als ein Verhältnis (L/D) von Länge (L) zu Durchmesser (D), wobei der Durchmesser (D) ein durchschnittlicher Durchmesser von 6 bis 16 $\mu$m ist.

**6.** Thermoplastische Harzzusammensetzung nach Anspruch 1, wobei das nichtaromatische Polyamidharz Polyhexamethylenadipamid (PA66) ist und in einer Menge von 25 bis 60 Gew.-%, bezogen auf ein Gesamtgewicht der thermoplastischen Harzzusammensetzung, enthalten ist.

**7.** Thermoplastische Harzzusammensetzung nach Anspruch 1, wobei das aromatische Polyamidharz Polyhexamethylenisophthalamid (PA6I) ist und in einer Menge von 4 bis 25 Gew.-%, bezogen auf ein Gesamtgewicht der thermoplastischen Harzzusammensetzung, enthalten ist.

**8.** Thermoplastische Harzzusammensetzung nach Anspruch 1, ferner umfassend 5 Gew.-% oder weniger eines oder mehrerer Additive, ausgewählt aus einem Flammschutzmittel, einem Nukleierungsmittel, einem Wärmestabilisator, einem Lichtstabilisator, einem Schmiermittel, einem Antioxidationsmittel und einem Verdickungsmittel, bezogen auf ein Gesamtgewicht der thermoplastischen Harzzusammensetzung.

**9.** Thermoplastische Harzzusammensetzung nach Anspruch 1, wobei, wenn die Raumtemperaturzugfestigkeit gemäß Standardmessung ISO 527 als "a" markiert ist, die Dehnung in einem markierten Abschnitt von 50 mm gemäß ISO 527 als "b" markiert ist und eine Differenz zwischen einer Fließrichtung (MD) und einer senkrechten Richtung (TD) der

Glasfaser, gemessen bei einer Geschwindigkeit von 5 mm/min unter Verwendung einer Probe mit einer Dicke von 3,2 mm und einer Breite von 12,7 mm gemäß ASTM D638 Typ 1, als "c" markiert ist, in Gleichung "a+b/c" die thermoplastische Harzzusammensetzung einen berechneten Wert von 2,88 oder mehr aufweist.

**10.** Thermoplastische Harzzusammensetzung nach Anspruch 1, wobei, wenn die Abbaurate der physikalischen Eigenschaften (%) unter Verwendung der Raumtemperaturzugfestigkeit (23 °C) und der Hochtemperaturzugfestigkeit (90 °C) gemäß Standardmessung ISO 527 berechnet wird, die thermoplastische Harzzusammensetzung die nachstehende Gleichung 1 erfüllt:

$$34 \leq 100 - (\text{Hochtemperaturmesswert}/\text{Raumtemperaturmesswert} \times 100) \leq 44 \qquad \text{[Gleichung 1]}$$

**11.** Verfahren zum Herstellen einer thermoplastischen Harzzusammensetzung, umfassend Schmelzkneten und Extrudieren von 20 bis 64 Gew.-% eines nichtaromatischen Polyamidharzes mit einer Glasübergangstemperatur (Tg) von 50 bis 60 °C, gemessen durch DSC unter Verwendung einer Heizrate von 10 °C/min, und einer Schmelztemperatur (Tm) von 240 bis 265 °C, gemessen durch DSC unter Verwendung einer Heizrate von 10 °C/min; 36 bis 80 Gew.-% Glasfaser, umfassend 58 bis 62 Gew.-% Siliciumdioxid, 14 bis 18 Gew.-% Aluminiumoxid, 10 bis 13 Gew.-% Calciumoxid, 8 bis 10 Gew.-% Magnesiumoxid, 0,5 bis 2 Gew.-% Titandioxid, 0,8 Gew.-% oder weniger in der Summe von Natriumoxid und Kaliumoxid und 0,5 Gew.-% oder weniger von $Fe_2O_3$ , oder
umfassend 52 bis 56 Gew.-% Siliciumdioxid, 12 bis 16 Gew.-% Aluminiumoxid, 20 bis 24 Gew.-% Calciumoxid, 1,5 Gew.-% oder weniger Magnesiumoxid, 1 Gew.-% oder weniger Titandioxid, 0,8 Gew.-% oder weniger in der Summe von Natriumoxid und Kaliumoxid, 0,4 Gew.-% oder weniger von $Fe_2O_3$ , 5 bis 8 Gew.-% Boroxid und 0,7 Gew.-% oder weniger von Fluor (F); und 0 bis 30 Gew.-% eines aromatischen Polyamidharzes,
wobei die thermoplastische Harzzusammensetzung eine Raumtemperaturzugfestigkeit von 270 MPa oder mehr aufweist, gemessen gemäß Standardmessung ISO 527.

**12.** A molded article manufactured using the thermoplastic resin composition according to any one of claims 1 to 10.

## Revendications

**1.** Composition de résine thermoplastique, comprenant:

20 à 64 % en poids d'une résine polyamide non aromatique ayant une température de transition vitreuse (Tg) de 50 à 60 °C mesurée par DSC à une vitesse de chauffage de 10 °C/min et une température de fusion (Tm) de 240 à 265°C mesurée par DSC à une vitesse de chauffage de 10 °C/min;
36 à 80 % en poids de fibres de verre

comprenant 58 à 62 % en poids de silice, 14 à 18 % en poids d'alumine, 10 à 13 % en poids d'oxyde de calcium, 8 à 10 % en poids de magnésie, 0,5 à 2 % en poids de dioxyde de titane, 0,8 % en poids ou moins en somme d'oxyde de sodium et d'oxyde de potassium, et 0,5 % en poids ou moins de $Fe_2O_3$, ou
comprenant 52 à 56 % en poids de silice, 12 à 16 % en poids d'alumine, 20 à 24 % en poids d'oxyde de calcium, 1,5 % en poids ou moins de magnésie, 1 % en poids ou moins de dioxyde de titane, 0,8 % en poids ou moins en somme d'oxyde de sodium et d'oxyde de potassium, 0,4 % en poids ou moins de $Fe_2O_3$, 5 à 8 % en poids d'oxyde de bore, et 0,7 % en poids ou moins de fluor (F); et

0 à 30 % en poids d'une résine polyamide aromatique,
la composition de résine thermoplastique a une résistance à la traction à température ambiante de 270 MPa ou plus, mesurée selon la norme ISO 527.

**2.** Composition de résine thermoplastique selon la revendication 1, dans laquelle une température de transition vitreuse (Tg) de la résine polyamide non aromatique est indiquée par « a », la température de transition vitreuse (Tg) de la résine polyamide aromatique est désignée par « b », la température de fusion (Tm) de la résine polyamide non aromatique est désignée par « c », et la teneur en silice contenue dans la fibre de verre est désignée par « d », la composition de résine thermoplastique satisfait aux équations 1 à 3 ci-dessous.

[Équation 1]

$$4,8a \leq c \leq 5,3a,$$

[Équation 2]

$$2d \leq b \leq 2,5d,$$

et

[Équation 3]

$$a < b < c,$$

a, b, c et d satisfont respectivement aux conditions suivantes: $50 \leq a \leq 60$, $106 \leq b \leq 150$, $240 \leq c \leq 265$ et $52 \leq d \leq 66$, respectivement.

3. Composition de résine thermoplastique selon la revendication 1, dans laquelle la fibre de verre est une fibre de verre circulaire contenant 17 à 24 % en poids au total d'oxyde de calcium et de magnésium et ayant une section transversale circulaire.

4. Composition de résine thermoplastique selon la revendication 1, dans laquelle la fibre de verre est une fibre de verre plate contenant au total 21 à 25 % en poids d'oxyde de calcium et de magnésium et ayant une section transversale non circulaire.

5. Composition de résine thermoplastique selon la revendication 1, dans laquelle la fibre de verre a un rapport d'aspect de 1:1 à 1:4 exprimé comme rapport (L/D) de la longueur (L) au diamètre (D), le diamètre (D) étant un diamètre moyen de 6 à 16 μm.

6. Composition de résine thermoplastique selon la revendication 1, dans laquelle la résine polyamide non aromatique est du polyhexaméthylène adipamide (PA66) et est compris une quantité de 25 à 60 % en poids par rapport au poids total de la composition de résine thermoplastique.

7. Composition de résine thermoplastique selon la revendication 1, dans laquelle la résine polyamide aromatique est du polyhexaméthylène isophtalamide (PA6I) et est compris en une quantité de 4 à 25 % en poids par rapport au poids total de la composition de résine thermoplastique.

8. Composition de résine thermoplastique selon la revendication 1, comprenant en outre 5 % en poids ou moins d'un ou plusieurs additifs choisis parmi un retardateur de flamme, un agent nucléant, un stabilisateur thermique, un stabilisateur de lumière, un lubrifiant, un antioxydant, un agent d' et un épaississant, par rapport au poids total de la composition de résine thermoplastique.

9. Composition de résine thermoplastique selon la revendication 1, dans laquelle, lorsque la résistance à la traction à température ambiante selon la norme ISO 527 est indiquée par « a », l'allongement dans une section marquée de 50 mm selon la norme ISO 527 est indiqué par « b », et la différence entre une direction d'écoulement (MD) et une direction perpendiculaire (TD) de la fibre de verre, mesurée à une vitesse de 5 mm/min à l'aide d'un spécimen d'une épaisseur de 3,2 mm et d'une largeur de 12,7 mm selon la norme ASTM D638 Type 1, est indiquée par « c », dans l'équation « a+b/c », la composition de résine thermoplastique a une valeur calculée de 2,88 ou plus.

10. Composition de résine thermoplastique selon la revendication 1, dans laquelle, lorsque le taux de dégradation des propriétés physiques (%) est calculé en utilisant la résistance à la traction à température ambiante (23 °C) et la résistance à la traction à haute température (90 °C) conformément à la norme ISO 527 de mesure de l' , la composition de résine thermoplastique satisfait à l'équation 1 ci-dessous.

[Équation 1] $34 \leq 100 - (\text{valeur mesurée à haute température}/\text{valeur mesurée à température ambiante} \times 100) \leq 44$ [Équation 1]

**11.** Méthode de préparation d'une composition de résine thermoplastique, comprenant le malaxage à l'état fondu et l'extrusion de 20 à 64 % en poids d'une résine polyamide non aromatique ayant une température de transition vitreuse (Tg) de 50 à 60 °C mesurée par DSC en utilisant une vitesse de chauffage de 10 °C/min et une température de fusion (Tm) comprise entre 240 et 265 °C mesurée par DSC à une vitesse de chauffage de 10 °C/min ; 36 à 80 % en poids de fibres de verre comprenant 58 à 62 % en poids de silice, 14 à 18 % en poids d'alumine, 10 à 13 % en poids d'oxyde de calcium, 8 à 10 % en poids de magnésie, 0,5 à 2 % en poids de dioxyde de titane, 0,8 % en poids ou moins en somme d'oxyde de sodium et d'oxyde de potassium, et 0,5 % en poids ou moins de $Fe_2O_3$,ou
comprenant 52 à 56 % en poids de silice, 12 à 16 % en poids d'alumine, 20 à 24 % en poids d'oxyde de calcium, 1,5 % en poids ou moins de magnésie, 1 % en poids ou moins de dioxyde de titane , 0,8 % en poids ou moins en somme d'oxyde de sodium et d'oxyde de potassium, 0,4 % en poids ou moins de $Fe_2O_3$, 5 à 8 % en poids d'oxyde de bore, et 0,7 % en poids ou moins de fluor (F); et 0 à 30 % en poids d'une résine polyamide aromatique,
la composition de résine thermoplastique a une résistance à la traction à température ambiante de 270 MPa ou plus, mesurée selon la norme ISO 527.

**12.** Article moulé fabriqué à partir de la composition de résine thermoplastique selon l'une quelconque des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2016102203 A1
- WO 2020169547 A1
- EP 3130633 A1
- KR 1626783 B1